# EUROPEAN PATENT SPECIFICATION

(11) **EP 1 707 252 B1**
(45) Date of publication and mention of the grant of the patent: **23.03.2016**
(21) Application number: 06251625.7
(22) Date of filing: 27.03.2006
(51) Int. Cl.: B01D 46/24, C04B 35/195, C04B 38/00, F01N 3/022

(54) **Honeycomb structure**
Wabenstruktur
Structure en nid d'abeilles

(30) Priority: 28.03.2005 JP 2005092463
(43) Date of publication of application: 04.10.2006
(73) Proprietor: NGK Insulators, Ltd., Nagoya-city, Aichi 467-8530 (JP)
(72) Inventor: Kai, Ryuji,, Nagoya City, Aichi-ken 4678530 (JP); Yamada, Toshio, Nagoya City, Aichi-ken 4678530 (JP)
(74) Representative: Naylor, Matthew John

(56) References cited:
- EP-A- 1 316 686
- EP-A- 1 650 413
- EP-A1- 1 491 734

## Description

### BACKGROUND OF THE INVENTION

### Field of the Invention

The present invention relates to a honeycomb structure.

### Description of the Related Art

There is an increasing necessity of removing particles and toxic substances from an exhaust gas of an internal combustion engine, a boiler or the like in consideration of influences on environments. In the United States and Europe as well as Japan, regulations tend to be tightened on the removing of particulate matters (hereinafter referred to as the PM) discharged especially from a diesel engine, and a honeycomb filter using a honeycomb structure is used in a capturing filter (hereinafter referred to as the DPF) for removing the PM. The honeycomb filter using the honeycomb structure is also used in a film for filtering or separating a liquid such as water and sewage.

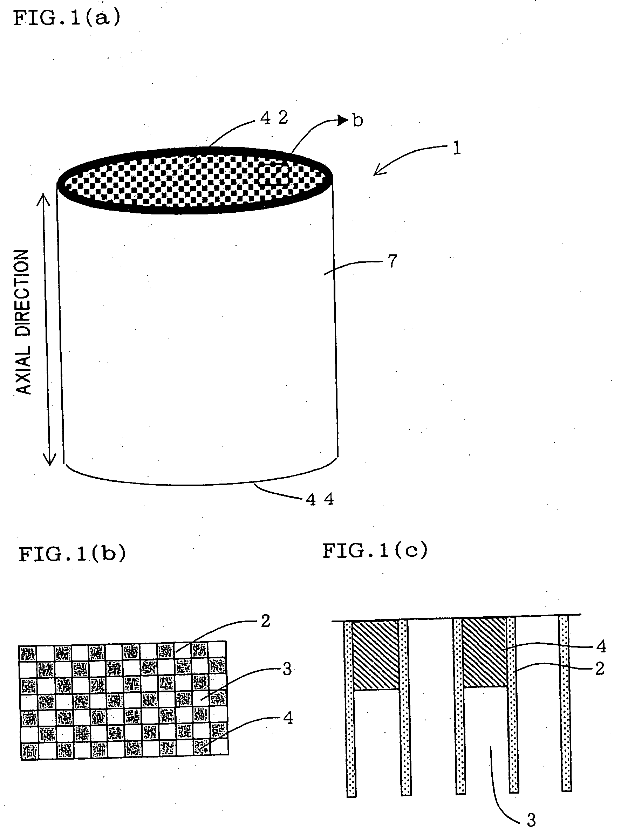

In a case where the honeycomb structure is used as such honeycomb filter, for example, as shown in FIGS. 1(a) to (c), the filter is sometimes used in the form of a honeycomb structure 1 including: porous partition walls 2 arranged to define a plurality of cells 3 extending in an axial direction from one end portion 42 to the other end portion 44; and plugging portions (plugging materials) 4 arranged to plug the cells 3 in either end portion. In this case, a fluid to be treated flowing into the cell from one end portion 42 flows through the porous partition wall 2 and another cell 3, and the fluid is discharged from the other end portion 44. In this case, the partition wall 2 functions as a filter to capture the PM and the like.

However, in a case where such honeycomb structure is used as the DPF or the like, when a large amount of deposits such as the PM are deposited in an opening end portion of the cell, an inflow area of the opening end portion decreases, or the opening end portion is clogged to cause problems that a pressure loss of the honeycomb filter increases, an output of the diesel engine drops, and fuel consumption is deteriorated.

To solve the above-described problem, in a case where the honeycomb structure including the plugging portions is used for the DPF, for example, there is proposed a ceramic honeycomb filter in which each partition wall of the ceramic honeycomb structure has a porosity of 50 to 80%, the porosity of each plugging material is larger than that of the partition wall, and the plugging portion has a thickness of 3 to 15 mm (see Japanese Patent Application Laid-Open No. 2003-236322 and EP1316686). When the ceramic honeycomb filter is used, the pressure loss is reduced, a resistance to thermal shock is achieved (to prevent crack generation or dissolved loss due to the thermal shock during regeneration of the filter), and a temperature rise property during the filter regeneration can be improved to shorten a regeneration time. However, since the porosity of the plugging material is larger (70 to 90%) than that of the partition wall, there is a problem that the plugging portion still has an insufficient strength.

### SUMMARY OF THE INVENTION

The present invention has been developed in view of the above-described problems of the conventional technology, and an object is to provide a honeycomb structure which is excellent especially in such a resistance to thermal shock as to prevent generation of cracks and dissolved losses in partition wall intersections as critical damages for a filter and which is capable of securing a sufficient bonding strength to partition walls even in a case where plugging portions have a high porosity.

To achieve the above object, the present invention provides the honeycomb structure as set out in claim 1.

Preferably the thickness of the plugging portion is in a range of 3 to 30 mm.

Preferably the porosity of the plugging portion is larger than that of the partition wall.

Preferably the porosity of the partition wall is in a range of 45 to 85%.

Preferably the main crystal phase of the honeycomb structure is at least one of cordierite, silicon carbide, silicon nitride, alumina, mullite, aluminum titanate, and lithium aluminum silicate.

The invention also provides the use to this honeycomb structure , whose partition walls have a filtering capability, as a filter for capturing and removing particulate matters included in an exhaust gas of an internal combustion engine.

According to the present invention, the honeycomb structure is excellent especially in such a resistance to thermal shock as to prevent generation of cracks and dissolved losses in each plugging portion and each partition wall intersection in the vicinity of the plugging portion which are critical for a filter. The structure is capable of securing a sufficient bonding strength to the partition walls even in a case where the plugging portions have a high porosity.

### BRIEF DESCRIPTION OF THE DRAWINGS

FIG. 1(a) is a schematic perspective view showing a honeycomb structure in an embodiment of the present invention, FIG. 1(b) is a schematic partially enlarged view of FIG. 1(a), and FIG. 1(c) is a schematic parallel sectional view of FIG. 1(a); and
FIG. 2 is a schematic diagram of a device for use in checking a bonding strength of a plugging portion in the embodiment.

### DESCRIPTION OF THE PREFERRED EMBODIMENT

A honeycomb structure of the present invention will be described hereinafter in detail in accordance with some embodiments, but the present invention is not restrictively interpreted from these embodiments. It is to be noted that in the following description, a section crossing a longitudinal direction (an axial direction shown in FIG. 1) of a cell is referred to as an orthogonal section, and a section parallel to the longitudinal direction of the cell is referred to as a parallel section.

FIG. 1(a) is a schematic perspective view showing a honeycomb structure in an embodiment of the present invention, FIG. 1(b) is a schematic partially enlarged view of FIG. 1(a), and FIG. 1(c) is a schematic parallel sectional view of FIG. 1(a). As shown in FIGS. 1(a) to (c), a honeycomb structure 1 includes: a porous partition walls 2 arranged to define cells 3 connecting two end faces 42 and 44 to each other; and plugging portions 4 arranged to plug the cells 3 in either end face.

Main characteristics of a honeycomb structure of the present invention lie in a honeycomb structure including: porous partition walls arranged to define a plurality of cells connecting two end faces to each other; and plugging portions arranged to plug the cells in at least one of the end faces, wherein a porosity of each plugging portion is 50 to 90%, and an area of pores each having a sectional area of 0.15 mm² or more is 30% or more (more preferably 40% or more) of a total pore area, the sectional area occupying an arbitrary section including a central axis of the plugging portion. If the ratio is excessively large, the plugging portions are excessively dense which are not the pores each having the sectional area of 0.15 mm² or more. This is not preferable from a viewpoint of pressure loss. Therefore, the porosity is preferably 85% or less, more preferably 75% or less.

Consequently, in the honeycomb structure of the present invention, it is supposedly possible to lower Young's modulus in the plugging portion and in the vicinity of the plugging portion as compared with a conventional plugging portion. Since a resistance to thermal shock can be improved, it is especially possible to prevent generation of cracks or dissolved losses in partition wall intersections critical for a filter. This is because a quickly heating property of the plugging portion is improved, it is possible to reduce a stress generated in the plugging portion or an interface between a plugging material and the partition wall even under thermal shock, and the cracks are not easily generated. Furthermore, as to the pores each having a sectional area of 0.15 mm² or more in the arbitrary section including the central axis of the plugging portion, the area of the pores occupies 30% or more of the total pore area. Therefore, in a drying step after the plugging material is filled, the plugging portion is prevented from being easily peeled from the partition wall by contraction of the plugging material. In consequence, there can be expected improvement of a bonding strength between the plugging portion and the partition wall.

Moreover, further characteristics of the honeycomb structure of the present invention lie in that among the pores each having the sectional area of 0.15 mm² or more in the arbitrary section including the central axis of the plugging portion, the center of gravity of each of a half or more of the pores is disposed in the vicinity of the central axis of the plugging portion. Here, the vicinity of the central axis of the plugging portion refers to an inner portion of a circle having a diameter of 1/4 of that of an inscribed circle and centering on the center of the inscribed circle with the plugging portion in a plugging portion section cut along a direction perpendicular to the axial direction of the cell. If there are too many such inner portions, a through hole is made in the plugging portion in the vicinity of the central axis of the plugging portion. Therefore, among the pores each having a sectional area of 0.15 mm² or more in the arbitrary section including the central axis of the plugging portion, 80% or less of the pores have the center of gravity in the vicinity of the central axis of the plugging portion.

Accordingly, in the honeycomb structure of the present invention, even if the plugging portion has a high porosity, it is possible to secure a sufficient bonding strength with respect to the partition wall. This is because the half or more of the pores having a sectional area of 0.15 mm² or more are disposed in the vicinity of the central axis, comparatively small pores are therefore formed plug to the partition walls, and therefore there can be expected the increase of the bonding area between the partition wall and the plugging portion. Since the half or more of the pores having a sectional area of 0.15 mm² or more are disposed in the vicinity of the central axis, it is possible to reduce stresses generated under the thermal shock in the vicinity of the central axis. It can also be expected that the cracks are not easily generated.

Furthermore, in the honeycomb structure of the present invention, a thickness of the plugging portion is preferably 3 to 30 mm. If the thickness of the plugging portion is below 3 mm, a bonding force between the plugging portion and the partition wall lowers, and the plugging portion sometimes peels from the partition wall. If the thickness exceeds 15 mm, a filter area relatively becomes small, and pressure losses increase. However, when the plugging portion is formed in excess of a thickness of 15 mm, a thermal capacity of the plugging portion is increased, and an excessive temperature rise during regeneration of the DPF can be prevented. It is to be noted that the thickness of the plugging portion can be obtained from a difference between a honeycomb structure total length and an insertion depth in a case where a rod made of a metal having a diameter of 0.6 mm is inserted from an operating end portion of the cell, and the insertion depth of this rod is measured.

In addition, in the honeycomb structure of the present invention, the porosity of the plugging portion is preferably larger than that of the partition wall. Accordingly, in the honeycomb structure of the present invention, the thermal capacity is small, and a quickly heating property of the plugging material is improved as compared with a plugging material made of the same material as that of the conventional partition wall to reduce the pressure losses of the honeycomb structure. Therefore, it is possible to prevent cracks from being generated in the plugging material and an interface between the plugging material and the partition wall under the thermal shock during the regeneration of the filter.

At this time, in the honeycomb structure of the present invention, the porosity of the partition wall is preferably 45 to 85% in that the pressure losses are reduced and an exhaust gas capturing efficiency is optimized.

The honeycomb structure of the present invention is preferably a ceramic whose main crystal phase is at least one selected from the group consisting of cordierite, silicon carbide, silicon nitride, alumina, mullite, aluminum titanate, and lithium aluminum silicate. It is to be noted that the main crystal phase means a phase constituting 50 mass% or more, preferably 70 mass% or more, more preferably 90 mass% or more of the crystal phase constituting the member (e.g., the partition wall).

There is not any special restriction on a sectional shape of the cell crossing the longitudinal direction at right angles in the honeycomb structure of the present invention, but examples of the sectional shape include triangle, quadrangle, hexagon, octagon, and circle. The orthogonal sectional shape of the cell does not have to be one type in one honeycomb structure, and the structure may include a plurality of types of shapes. It is to be noted that there is not any special restriction on a shape of the honeycomb structure of the present invention. An orthogonal sectional shape of the honeycomb structure can be appropriately selected from, for example, circle, ellipse, race track shape, quadrangle, trapezoid and the like depending on an application or an installation place. A cell density is, for example, 0.9 cell/cm² to 311 cells/cm², preferably 7.8 cells/cm² to 155 cells/cm².

Moreover, the honeycomb structure of the present invention includes the plugging portions arranged to plug the cells in either end face so that a predetermined amount of a fluid to be treated passes through the partition walls. The plugging portions are preferably arranged so as to alternately plug the cells 3 in the end faces 42 and 44 as in the plugging portions 4 of the honeycomb structure 1 shown in FIGS. 1(a) and 1(b). There is not any special restriction on the material of the plugging portions 4, but a ceramic is preferable, and the material preferably contains a ceramic whose main crystal phase is at least one selected from the group consisting of cordierite, silicon carbide, silicon nitride, alumina, mullite, aluminum titanate, and lithium aluminum silicate. It is to be noted that the honeycomb structure shown in FIG. 1(a) further includes an outer peripheral wall 7. The outer peripheral wall 7 may be formed integrally with the partition walls 2, or made of a coating material on an outer periphery of the structure.

Furthermore, the honeycomb structure of the present invention preferably carries a catalyst such as a metal having a catalytic capability. For example, in a case where the honeycomb structure is used as the DPF, the structure preferably includes a catalyst capable of removing the PM and the like, such as a catalyst having a capability of promoting oxidation/combustion of the PM in order to remove the PM and the like captured in the honeycomb structure. Typical examples of such catalyst include a noble-metal-based catalyst of Pt, Pd, Rh or the like, and a non-metal-based perovskite type catalyst. At least one of these catalysts are preferably carried by the partition walls of the honeycomb structure, In consequence, in the honeycomb structure of the present invention, the partition walls have a filtering capability, and the structure is usable as a filter for capturing and removing particulate matters included in an exhaust gas of an internal combustion engine.

Next, there will be described a manufacturing method capable of preferably manufacturing the honeycomb structure 1 shown in FIGS. 1(a) to (c).

The method is a method of manufacturing a ceramic honeycomb structure in which one end portion of a predetermined cell is plugged with a plugging portion made of a plugging material filled in the cell in a ceramic honeycomb article having a plurality of cells defined by porous partition walls and extending in an axial direction, and as to the remaining cells, an end portion of the cell opposite to that of the predetermined cell is similarly plugged with the plugging portion. As a characteristic constitution, the cell of the ceramic honeycomb article is filled with a slurry-like plugging material to which a pore former has been added.

When an organic and/or inorganic spherical pore former is used as the pore former to be added to the plugging material, it is easy to obtain a targeted pore having a sectional area of 0.15 mm² or more. In a case where the spherical pore former is added to the plugging material to form the plugging material, since the material does not have to be passed through a narrow slit of a die for use in extrusion-forming a honeycomb article, the material has a comparatively large diameter, for example, a diameter of about 0.5 to 1.0 mm without any problem. Since any large force is not applied to the pore former to be added to the targeted plugging material during use unlike the extrusion-forming, there is hardly a problem in a strength of the material. Even a pore former having a small strength is usable. Bubbles may be used as the pore former instead of the organic or inorganic spherical pore former. While the pore former is stirred, a gas such as air, carbon dioxide, nitrogen, LPG or LNG may be blown from a gas jet port into the pore former. It is possible to prepare a bubble having an arbitrary size depending on a pressure of the gas or a diameter or a shape of the gas jet port.

After filling the cell of the ceramic honeycomb article with the slurry-like plugging material to which the pore former has been added, the step shifts to the next manufacturing step which is a drying step. After filling the cell with the slurry-like plugging material to which the pore former has been added, the article is left to stand for a predetermined time. Then, a part of the pore former in the plugging material moves to the vicinity of the central axis, and more pore former is distributed in the vicinity of the central axis rather than the vicinity of the partition wall. Especially, a pore having a large pore diameter has such tendency, and larger pores more easily move to the vicinity of the central axis. Thereafter, the drying step is performed, and further a firing step is performed. Then, a position where the pore former burns out and the bubble remains as such is formed into the pore. Therefore, in the plugging portion, more pores are formed in the vicinity of the central axis rather than the vicinity of the partition wall. As a result, there is obtained a ceramic honeycomb structure in which pores having a sectional area of 0.15 mm² or more are formed in the vicinity of the partition wall in the plugging portion.

In this manufacturing method, it is possible to control the distribution of the pores depending on slurry viscosity of the plugging material, a time for which the article is left to stand, atmospheric temperature, a posture of the ceramic honeycomb structure when left to stand and the like. To obtain an ideal pore distributed state, the structure is preferably left to stand for at least 30 minutes.

Moreover, instead of leaving the ceramic honeycomb structure filled with the plugging material to stand for a predetermined time as described above, vibrations may be applied to the ceramic honeycomb structure for the predetermined time. When the ceramic honeycomb structure is vibrated in this manner, a part of the pore former in the plugging material can be moved to the vicinity of the central axis in a shorter time as compared with the structure is left to stand as such. Therefore, the time can be preferably reduced. The ceramic honeycomb structure may be continuously or intermittently vibrated. Needless to say, the leaving-to-stand may be appropriately combined with the vibrating. There is not any special restriction on vibration conditions in this case, but it is preferable to appropriately select arbitrary conditions in ranges of a vibration number of 1 to 200 kHz, a vibration acceleration of 0.001 to 10 G, and a vibration time of five minutes or more. The vibrating may be appropriately combined with the leaving-to-stand.

### [Examples]

The present invention will be described in more detail in accordance with examples, but the present invention is not limited to these examples.

### (Examples 1 to 12, Comparative Examples 1 to 6)

### Examples 1,3,4,6,8 and 10 are not within the scope of the invention.

There were prepared cordierite-made honeycomb structures having shapes shown in FIGS. 1(a) and 1(b), a diameter of 254 mm, a length of 260 mm, a partition wall thickness of 0.25 mm, and a cell density of 46 cells/cm² on conditions shown in Table 1 by use of a cordierite forming material based on the above-described manufacturing method, and the resultant honeycomb structures (filters) were evaluated. The results are shown in Table 1. In a plugging material, there was used a material obtained by adding hollow resin particles as a pore former to the cordierite forming material. A thickness of each plugging portion was set to 10 mm. After filling the plugging material, each honeycomb structure was left to stand for a predetermined time, or vibrated, or left to stand and vibrated in a combined manner. After drying the structure, the structure was fired. In the present examples, the fired honeycomb article was filled with the plugging material, but the honeycomb article may be filled with the plugging material before fired.

### (Evaluation Methods)

### (1) Porosity, pore area, pore distribution, and gravity center of pore

They were obtained by taking a photograph of each section with a scanning electron microscope (SEM) and using marketed image analysis software (Image Pro Plus (trade name) manufactured by Media Cybernetics, Inc.). A magnification of the SEM photograph may be such that a clear image is obtained, and an arbitrary magnification may be selected. In the present examples, an image with a magnification of 30 times was used.

### (2) Resistance to thermal shock

The resistance to thermal shock was evaluated by an electric furnace spalling test, and the test was carried out by the method described in the car standards "Test Method of Ceramic Monolith Carrier for Car Exhaust Gas Purifying Catalyst" M505-87 (established by the Society of Automotive Engineers of Japan). A temperature of an electric furnace was raised every 25°C in a stepwise manner, and a maximum temperature at which any destruction such as crack was not generated in the honeycomb structure was regarded as a thermal shock resistant temperature. As samples, in addition to honeycomb structures of examples and comparative examples in which the end portion was plugged with the plugging material, honeycomb articles were prepared which were similar to these examples and comparative examples except that the end portion was not plugged with the plugging material. In the electric furnace spalling test, presence of the plugging portion was checked. That is, among the honeycomb structures of the example and the comparative example, and the honeycomb article whose end portion was not plugged, in a case where there was not any significant difference between the thermal shock resistant temperatures, the resistance to thermal shock was judged to be satisfactory (O). In a case where the thermal shock resistant temperatures of the honeycomb structures of the example and the comparative example dropped at 25°C or less, the structures were regarded as slightly satisfactory (Δ) with respect to the honeycomb article whose end portion was not plugged. In a case where the temperature drop was above 25°C, the resistance to the thermal shock was judged to be defective (x). It is to be noted that three test samples were used for each standard.

### (3) Bonding strength of plugging portion

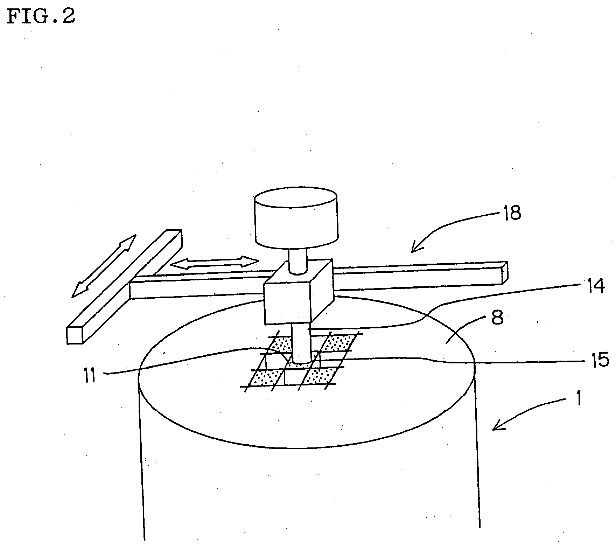

The bonding strength of the plugging portion was checked using a device having a structure shown in FIG. 2. This device includes: a load transmission member 14 which applies a load from an end face 8 of a honeycomb structure 1 to a plugging portion 11; and a movement mechanism 18 which can move this load transmission member 14 in parallel with the end face 8 of the honeycomb structure 1. The movement mechanism 18 is constituted so as to align a distal end 15 of the load transmission member 14 with the plugging portion 11 whose bonding strength is to be checked. The load can be applied to the plugging portion 11 in a perpendicular direction (axial direction). To evaluate the bonding strength, in a case where the load to be added to the plugging portion was gradually increased in the present device, when the bonding strength was smaller than a partition wall strength, and the plugging portion was detached from the partition wall, the bonding strength was judged to be defective (×). When the plugging portion was detached from the partition wall, and substantially simultaneously the partition wall was broken, the bonding strength was judged to be slightly satisfactory (Δ). When the plugging portion was not detached from the partition wall, and the partition wall was broken, the bonding strength was judged to be satisfactory (○).

**[Table 1]**

| | Porosity of partition wall (%) | Porosity of plugging portion (%) | Ratio of area of pores having sectional area of 0.15 mm² or more (%)^{*1} | Ratio of pores having sectional area of 0.15 mm² or more and disposed in the vicinity of central axis (%)^{*2} | Resistance to thermal shock | Bonding strength of plugging portion |
|---|---|---|---|---|---|---|
| Example 1 | 45 | 50 | 30 | 41 | Δ | Δ |
| Example 2 | 45 | 50 | 30 | 52 | Δ | ○ |
| Example 3 | 45 | 50 | 52 | 43 | ○ | Δ |
| Example 4 | 55 | 62 | 59 | 42 | ○ | Δ |
| Example 5 | 55 | 62 | 59 | 73 | ○ | ○ |
| Example 6 | 72 | 76 | 68 | 45 | ○ | Δ |
| Example 7 | 72 | 76 | 68 | 65 | ○ | ○ |
| Example 8 | 85 | 90 | 71 | 45 | ○ | Δ |
| Example 9 | 85 | 90 | 71 | 78 | ○ | ○ |
| Example 10 | 80 | 85 | 75 | 46 | ○ | Δ |
| Example 11 | 80 | 85 | 75 | 64 | ○ | ○ |
| Example 12 | 72 | 76 | 75 | 80 | ○ | ○ |
| Comparative Example 1 | 55 | 62 | 23 | 45 | × | Δ |
| Comparative Example 2 | 55 | 62 | 23 | 63 | × | ○ |
| Comparative Example 3 | 72 | 76 | 25 | 37 | × | × |
| Comparative Example 4 | 45 | 50 | 25 | 38 | × | × |
| Comparative Example 5 | 72 | 76 | 25 | 48 | × | Δ |
| Comparative Example 6 | 45 | 50 | 25 | 55 | × | ○ |

| | | | | | | |
|---|---|---|---|---|---|---|
| *1: Ratio of area of pores having sectional area of 0.15 mm² or more with respect to total pore area in section including central axis of plugging portion *2: Ratio of pores having center of gravity in the vicinity of central axis of plugging portion among pores having sectional area of 0.15 mm² or more in section including central axis of plugging portion | | | | | | |

### (Considerations: Examples 1 to 12)

As shown in Table 1, in the honeycomb structures (filters) of Examples 1 to 12, as to pores in an arbitrary section including the central axis of the plugging portion, an area of pores having a sectional area of 0.15 mm² or more occupied 30% or more of a total pore area, and the resistance to thermal shock had a satisfactory (○) or slightly satisfactory (Δ) judgment result.

Moreover, as to the bonding strength of the plugging portion, among the pores having a sectional area of 0.15 mm² or more in the arbitrary section including the central axis of the plugging portion, in a case where a ratio of the pores having the center of gravity in the vicinity of the central axis of the plugging portion was below 50%, the bonding strength was judged to be slightly satisfactory (Δ). When the ratio was 50% or more, the bonding strength was judged to be satisfactory (O).

### (Considerations: Comparative Examples 1 to 6)

As shown in Table 1, in the honeycomb structures (filters) of Comparative Examples 1 to 3, as to the pores in the arbitrary section including the central axis of the plugging portion, the area of the pores having a sectional area of 0.15 mm² or more occupied 30% or less of the total pore area, and the resistance to thermal shock had a defective (x) judgment result as to all of the structures.

The honeycomb structure of the present invention is preferably usable in a honeycomb structure for use especially as a filter such as a DPF for capturing and removing particulate matters included in a dust-containing fluid of an exhaust gas of an internal combustion engine.

## Claims

1. A honeycomb structure comprising:
porous partition walls (2) arranged to define a plurality of cells (3) connecting two end faces to each other; and
plugging portions (4) arranged to plug the cells in at least one of the end faces,
wherein the porosity of each plugging portion is in a range of 50 to 90%, and wherein, as seen in a section including the central axis of the plugging portion, the area of pores each having a sectional area of 0.15 mm² or more is 30% or more with respect to total pore area in said section, wherein among said pores each having the sectional area of 0.15 mm² or more in said section including the central axis of the plugging portion, the center of gravity of each of half or more of the pores is, in a section perpendicular to the longitudinal direction of the cell, within a circle having a diameter of one-quarter of the diameter of an inscribed circle of the cell and centering on the center of said inscribed circle, and 80% or less of the pores each having a sectional area of 0.15 mm² or more in said section have their center of gravity within said circle..

2. The honeycomb structure according to claim 1,
wherein a thickness of the plugging portion is in a range of 3 to 30 mm.

3. The honeycomb structure according to claim 1 or 2, wherein the porosity of the plugging portion is larger than that of the partition wall.

4. The honeycomb structure according to any one of claims 1 to 3, wherein the porosity of the partition wall is in a range of 45 to 85%.

5. The honeycomb structure according to any one of claims 1 to 4, whose main crystal phase is at least one of cordierite, silicon carbide, silicon nitride, alumina, mullite, aluminum titanate and lithium aluminum silicate.

6. Use of a honeycomb structure according to any one of claims 1 to 5, whose partition walls (2) have a filtering capability, as a filter for capturing and removing particulate matters included in an exhaust gas of an internal combustion engine.

## Patentansprüche

1. Wabenstruktur, umfassend:
poröse Unterteilungswände (2), die zur Definierung einer Vielzahl an Zellen (3) angeordnet sind, die zwei Endflächen miteinander verbinden; und
Verschluss-Abschnitte (4), die zum Verschließen der Zellen in mindestens einer der Endflächen angeordnet sind,
worin die Porosität von jedem Verschluss-Abschnitt in einem Bereich von 50 bis 90% ist, und worin, wie in einem Schnitt zu sehen ist, der die Mittelachse des Verschluss-Abschnitts umfasst, die Fläche der Poren, die jeweils eine Querschnittsfläche von 0,15 mm² oder mehr aufweist, 30% oder mehr mit Bezug auf die Gesamtporenfläche in dem Schnitt ist,
worin unter den Poren, die jeweils die Querschnittsfläche von 0,15 mm² oder mehr in dem Schnitt aufweist, der die Mittelachse des Verschluss-Teils umfasst, der Schwerpunkt von jeder der Hälfte oder mehr der Poren, in einem zur Längsrichtung der Zelle senkrechten Schnitt, innerhalb eines Kreises ist, der einen Durchmesser von einem Viertel des Durchmessers eines eingeschriebenen Kreises der Zelle aufweist, und auf den Mittelpunkt des eingeschriebenen Kreises zentriert ist, und 80% oder weniger der Poren, wobei jede jeweils eine Querschnittsfläche von 0,15 mm² oder mehr in dem Abschnitt aufweist, ihren Mittelpunkt innerhalb des Kreises aufweisen.

2. Wabenstruktur gemäß Anspruch 1, worin eine Dicke des Verschluss-Teils in einem Bereich von 3 bis 30 mm ist.

3. Wabenstruktur gemäß Anspruch 1 oder 2, worin die Porosität des Verschluss-Teils größer als diejenige der Unterteilungswand ist.

4. Wabenstruktur gemäß einem der Ansprüche 1 bis 3, worin die Porosität der Unterteilungswand in einem Bereich von 45 bis 85 % ist.

5. Wabenstruktur gemäß einem der Ansprüche 1 bis 4, deren Hauptkristallphase mindestens eines von Cordierit, Siliziumkarbid, Siliziumnitrid, Tonerde, Mullit, Aluminiumtitanat und Lithiumaluminiumsilikat ist.

6. Verwendung einer Wabenstruktur gemäß einem der Ansprüche 1 bis 5, deren Unterteilungswände (2) eine Filterfähigkeit als ein Filter zum Einfangen und Beseitigen von Feinstaub aufweisen, der in einem Abgas eines Verbrennungsmotors enthalten ist.

## Revendications

1. Structure en nid d'abeilles comprenant :
des parois de séparation poreuses (2) agencées pour définir une pluralité de cellules (3) reliant deux faces d'extrémité l'une à l'autre ; et
des parties d'obturation (4) agencées pour obturer les cellules dans au moins l'une des faces d'extrémité,
dans laquelle la porosité de chaque partie d'obturation est dans une plage de 50 à 90 %, et dans laquelle, comme on peut le voir dans une section comprenant l'axe central de la partie d'obturation, l'aire des pores ayant chacun une aire de section de 0,15 mm² ou plus est de 30 % ou plus par rapport à l'aire de pores totale dans ladite section, dans laquelle, parmi lesdits pores ayant chacun l'aire de section de 0,15 mm² ou plus dans ladite section comprenant l'axe central de la partie d'obturation, le centre de gravité de chacun de la moitié ou plus des pores est, dans une section perpendiculaire à la direction longitudinale de la cellule, dans un cercle ayant un diamètre d'un quart du diamètre d'un cercle inscrit de la cellule et centré sur le centre dudit cercle inscrit, et 80 % ou moins des pores ayant chacun une aire de section de 0,15 mm² ou plus dans ladite section ont leur centre de gravité dans ledit cercle.

2. Structure en nid d'abeilles selon la revendication 1, dans laquelle une épaisseur de la partie d'obturation est dans une plage de 3 à 30 mm.

3. Structure en nid d'abeilles selon la revendication 1 ou 2, dans laquelle la porosité de la partie d'obturation est supérieure à celle de la paroi de séparation.

4. Structure en nid d'abeilles selon l'une quelconque des revendications 1 à 3, dans laquelle la porosité de la paroi de séparation est dans une plage de 45 à 85 %.

5. Structure en nid d'abeilles selon l'une quelconque des revendications 1 à 4, dont la phase cristalline principale est au moins l'un de la cordiérite, du carbure de silicium, du nitrure de silicium, de l'alumine, de la mullite, du titanate d'aluminium et du silicate de lithium aluminium.

6. Utilisation d'une structure en nid d'abeilles selon l'une quelconque des revendications 1 à 5, dont les parois de séparation (2) ont une capacité de filtration, en tant que filtre pour capturer et retirer des matières particulaires incluses dans un gaz d'échappement d'un moteur à combustion interne.
